# EUROPÄISCHE PATENTSCHRIFT

(11) **EP 1 836 810 B1**
(45) Veröffentlichungstag und Bekanntmachung des Hinweises auf die Patenterteilung: **06.06.2012**
(21) Anmeldenummer: 04804696.5
(22) Anmeldetag: 06.12.2004
(51) Int. Cl.: H04W 88/06

(54) **VERFAHREN UND SYSTEM FÜR MOBILE NETZWERKNODES IN HETEROGENEN NETZWERKEN**
METHOD AND SYSTEM FOR MOBILE NETWORK NODES IN HETEROGENEOUS NETWORKS
PROCEDE ET SYSTEME POUR DES NOEUDS DE RESEAUX MOBILES DANS DES RESEAUX HETEROGENES

(43) Veröffentlichungstag der Anmeldung: 26.09.2007
(73) Patentinhaber: Swisscom AG, 3050 Bern (CH)
(72) Erfinder: DANZEISEN, Marc, Ittigen CH-3063 (CH); SCHÄDLER, Michael, CH-3065 Bolligen (CH); WINIKER, Simon, CH-3014 Bern (CH)
(74) Vertreter: BOVARD AG
(86) Internationale Anmeldenummer: PCT/EP2004/053295
(87) Internationale Veröffentlichungsnummer: WO 2006/061047

(56) Entgegenhaltungen:
- EP-A- 1 271 896
- EP-A- 1 424 825
- WO-A-03/028313

## Beschreibung

Die vorliegende Erfindung betrifft ein Verfahren und ein System zum Erstellen einer optimierten Kommunikationsverbindung und/oder eines optimierten Kommunikationsnetzwerkes zwischen mindestens zwei mobilen Netzwerknodes. Insbesondere betrifft die Erfindung optimierte Kommunikationsverbindungen und/oder optimierte Kommunikationsnetzwerke für mobile Netzwerknodes in heterogenen Netzwerken.

Weltweit werden zur Zeit immer mehr Computer- und Kommunikationssysteme dazu gebraucht, um grosse Datenmengen, insbesondere Multimediadaten über Netzwerke, wie z.B. einem LAN (Local Area Network), einem WAN (Wide Area Network) oder dem Internet via z.B. dem öffentlichen, geschalteten Telefonnetzwerk (PSTN: Public Switched Telephone Network), einem Mobilfunknetz (PLMN: Public Land Mobile Network) wie z.B. GSM-Netzen (Global System for Mobile Communication) oder UMTS-Netzen (Universal Mobile Telephone System) oder via z.B. einem WLAN (Wireless Local Area Network) etc. zu beziehen oder zu übermitteln. Dabei werden Daten dargestellt und/oder bearbeitet und/oder anderen Computersystemen modifiziert zur Verfügung gestellt. Solche Daten umfassen z.B. digitale Daten wie Texte, Graphiken, Bilder, Animationen, Video, Quicktime und Tonaufnahmen. Dazu gehören auch MPx (z.B. MP3) oder MPEGx (z.B. MPEG7) Standards, wie sie durch die Moving Picture Experts Group definiert werden. Gleichzeitig ist in den letzten Jahren ebenfalls weltweit die Zahl von mobilen Netzwerkbenutzern, insbesondere von Intemetbenutzem und der dort angebotenen Information exponentiell gestiegen. Das wachsende Angebot an IP-fähigen (Internet Protocol) mobilen Geräten, wie z.B. PDAs (Personal Digital Assistant), Mobilfunktelefonen und Laptops, geht mit dieser Entwicklung Hand in Hand. Der Übergang von fixen Netzwerknodes in Netzwerken zu flexibleren Anforderungen durch erhöhte Mobilität hat eben erst begonnen. In der Mobilfunktelefonie z.B. zeigt sich diese Tendenz u.a. auch an neuen Standards wie GPRS (General Packet Radio Services), EDGE (Enhanced Data GSM Environment), UMTS (Universal Mobile Telecommunications Service) oder HSDPA (High-Speed Downlink Packet Access). Um den Unterschied zwischen der momentanen Realität und den IP-Verbindungsmöglichkeiten der Zukunft zu verstehen, kann man sich als Vergleich die Entwicklung der Telefonie Richtung Mobilität in den letzten zwanzig Jahren vor das Auge rufen.

Mobile Computerbenutzung unterscheidet sich in vielen Arten von Computerbenutzung und Netzwerkfähigkeit in Festnetzwerken. Bei mobiler Netzwerkbenutzung stehen heute meist mehrere verschiedene Netzwerkstandards für die Anbindung des mobilen Netzwerknodes an ein Netzwerk zur Verfügung. Die verschiedenen Netzwerkanschlüsse unterscheiden sich jedoch typischerweise stark in Abhängigkeit des Standortes, des Netzwerkanschlusses etc., was die Sicherheit, Datendurchsatzrate, Quality of Service (QoS) Parameter etc. betrifft. Insbesondere kann eine Verbindung zeitweilig ganz unterbrochen werden. Z.B. kann ein mobiler Benutzer zuerst mittels Festnetzanschluss im Firmennetzwerk gearbeitet haben, dann beim Transfer zum Flughafen im Taxi z.B. mittels GPRS oder UMTS über ein Mobilfunknetz und schliesslich bei einem WLAN Hotspot oder Access Point im Flughafenwarteraum weiterarbeiten. Dabei sollte ein bestehender NetzwerkZugriff von Applikationen des mobilen Netzwerknodes nicht unterbrochen werden, wenn der Benutzer seinen Standort im Netzwerk ändert. Im Gegenteil sollten alle Verbindungs- und Schnittstellenänderungen z.B. bei einem Wechsel zwischen unterschiedlichen Netzwerken (Ethemet, Mobilfunknetz, WLAN, Bluetooth etc.) automatisch und nicht interaktiv geschehen können, so dass der Benutzer davon nicht einmal Kenntnis zu haben braucht. Dies gilt auch bei einem Schnittstellenwechsel, z.B. während der Benutzung von Real-Time-Applikationen. Sinnvollerweise sollte ein Schnittstellenwechsel im mobilen Netzwerknode basierend auf Datenübertragungsbandbreite, Kosten, Sicherheit etc. zusätzlich optimiert werden können. Idealerweise sollte dies natürlich automatisiert geschehen können. Wirkliches mobiles Computing weist viele Vorteile basierend auf einem jederzeit stabilen Zugang, z.B. zum Internet, auf. Erst mit einem solchem Zugang lässt sich die Arbeit wirklich frei und unabhängig vom Schreibtisch gestalten. Die Anforderungen an mobile Netzwerknodes in Netzwerken unterscheiden sich aber von der erwähnten Entwicklung in der Mobilfunktechnik auf verschiedene Arten. Die Endpunkte im Mobilfunk sind gewöhnlich Menschen. Bei mobilen Netzwerknodes können aber Computerapplikationen Interaktionen zwischen anderen Netzteilnehmem ohne jegliches menschliches Zutun oder Eingreifen ausführen. Beispiele dazu finden sich in Flugzeugen, Schiffen und Automobilen zur Genüge. So kann insbesondere mobiles Computing mit Internet-Zugriff zusammen mit anderen Applikationen wie z.B. in Kombination mit Positionsbestimmungsgeräten, wie dem satellitenbasierten GPS (Global Positioning System), sinnvoll sein.

Bei mobilem Netzwerkzugriff via Internet Protokoll (IP) wird das IP dazu benutzt, die Datenpakete von der Quelladresse (Source Address) zur Zieladresse (Destination Address) im Netz mittels so genannten IP-Adressen umzuleiten bzw. zu routen. Diese Adressen sind einem festen Standort im Netzwerk zugeordnet, ähnlich wie die Telefonnummern des Festnetzes einer physikalischen Dose zugeordnet sind. Wenn die Zieladresse der Datenpakete ein mobiler Netzwerknode ist, bedeutet das, dass bei jedem Netzwerkstandorfinrechsel eine neue IP-Netzwerkadresse zugeordnet werden muss, was den transparenten, mobilen Zugriff verunmöglicht. Diese Probleme wurden durch den mobilen IP Standard (IETF RFC 2002, Okt. 1996 und RFC 3220, Jan. 2002) der Internet Engineering Task Force (IETF) gelöst, indem das mobile IP dem mobilen Netzwerknode erlaubt, zwei IP-Adressen zu benutzen. Die eine davon ist die normale, statische IP-Adresse (Home-Address), die den Ort des Heimnetzes angibt, während die zweite eine dynamische IP-Adresse (Care-Of-Address) ist, die den aktuellen Standort des mobilen Netzwerknodes im Netz bezeichnet. Die Zuordnung der beiden Adressen erlaubt es, die IP-Datenpakete an die richtige, momentane Adresse des mobilen Netzwerknodes umzuleiten.

Das mobile IP der IETF löst jedoch nicht alle Probleme der mobilen Netzwerkbenutzung. Wie erwähnt kann es sinnvoll sein, bei mehreren verfügbaren Übertragungskanälen die Übertragungskanäle im mobilen Netzwerknode basierend auf Datenübertragungsbandbreite, Kosten, Sicherheit etc. zu optimieren, da nicht alle Daten notwendigerweise die gleichen QoS Parameter benötigen. So kann z.B. zum Austausch von Sicherheitsparametem und/oder Konfigurationsparametern, wie z.B. Identifizierung oder Authentifizierung mittels Passwörtern, Schlüsseln zur Datenverschlüsselung, etc., die Sicherheit der Verbindung viel bedeutsamer sein als z.B. die Übertragungsrate. Hingegen kann bei der Übertragung von grossen Datenmengen wie z.B. bei Multimediadaten die Bandbreite eine grössere Rolle spielen als die Datensicherheit. Dies gilt insbesondere bei der Einrichtung von virtuellen privaten Kommunikationsnetzen. Virtuelle private Kommunikationsnetze ermöglichen die direkte Kommunikation zwischen Kommunikationspartnern (peer-to-peer), ohne dass unberechtigte Drittparteien dieser Kommunikation beitreten oder Daten der Kommunikation missbräuchlich benutzen können. Im Unterschied zu realen privaten Kommunikationsnetzen werden virtuelle private Kommunikationsnetze über geteilte Kommunikationsmedien aufgebaut und typischerweise mittels kryptographischer Mechanismen gegenüber unberechtigten Drittparteien gesichert. Geteilte Kommunikationsmedien umfassen vorwiegend elektromagnetische Wellen, insbesondere im Funkbereich oder im Infrarotbereich. Zur Sicherung der Datenkommunikation über geteilte Kommunikationsmedien sind dem Fachmann verschiedene kryptographische Mechanismen bekannt, zum Beispiel IPSec (Internet Protocol Security) und SSL (Secure Socket Layer) zum Erstellen von gesicherten Röhren, so genannten Secure Pipes. Bei der Sicherstellung der Authentizität eines Kommunikationspartners ergeben sich allerdings grössere Probleme, weil selbst die Verwendung von Passwörtern und/oder Benutzeridentifizierungen keine Gewähr bietet, dass diese vom berechtigten Benutzer übermittelt werden.

In der Patentschrift US 6,445,920 werden Vorrichtungen für den Aufbau bzw. für das Erstellen von virtuellen privaten Kommunikationsnetzen zwischen Kommunikationsendgeräten von Teilnehmern in Mobilfunknetzen beschrieben. Gemäss US 6,445,920 werden Teilnehmer des Mobilfunknetzes, die an einem gemeinsamen virtuellen privaten Kommunikationsnetz teilhaben möchten, in einer Benutzerdatenbank des Mobilfunknetzes, dem so genannten HLR (Home Location Register), mit einer diesbezüglichen speziellen zusätzlichen Kennung registriert. Beim Einbuchen eines Teilnehmers in das Mobilfunknetz wird gemäss US 6,445,920, wie im normierten GSM-Mobilfunknetz (Global System for Mobile Communication), eine Benutzeridentifizierung von einem Identifizierungsmodul im Kommunikationsendgerät des Teilnehmers an das Mobilfunknetz übermittelt und unter Verwendung eines kryptographischen Verfahrens zwischen dem Identifizierungsmodul und einer Zugangskontrolleinheit des Mobilfunknetzes authentifiziert. Teilnehmer, die im Mobilfunknetz mit der speziellen Kennung eines bestimmten virtuellen privaten Kommunikationsnetzes registriert sind, können sich gemäss US 6,445,920 im Mobilfunknetz gegenseitig unter Verwendung von registrierten Kurzwahlnummern anrufen und von reduzierten Kommunikationstarifen profitieren.

In der Patentschrift US 6,445,920 wird zwar das Problem der Authentifizierung der Teilnehmer durch die GSM-Authentifizierung der Benutzeridentifizierungen gelöst, US 6,445,920 liefert jedoch keinen Hinweis darauf, wie mehr als zwei Teilnehmer in einem virtuellen privaten Kommunikationsnetz gemeinsam kommunizieren können oder wie Teilnehmer in einem virtuellen privaten Kommunikationsnetz ausserhalb des Mobilfunknetzes miteinander kommunizieren können. Die Kommunikation zwischen mehreren Kommunikationsendgeräten in virtuellen privaten Kommunikationsnetzen ausserhalb von zellulären Mobilfunknetzen wird jedoch insbesondere mit der Verbreitung von Kommunikationsendgeräten, die mit Kommunikationsschnittstellen für geteilte Kommunikationsmedien ausgerüstet sind, immer wünschenswerter. Kommunikationsendgeräte werden immer häufiger mit Kommunikationsschnittstellen für lokale Kommunikationsnetze basierend auf verteilten Kommunikationsmedien ausgerüstet, beispielsweise WLAN-Module (Wireless Local Area Network), Funkgeräteschnittstellen wie Bluetooth, oder Infrarotgeräteschnittstellen wie IrDA (Infrared Data Association).

In der Patentanmeldung EP 1 424 825 wird ein Verfahren zum Aufbauen eines virtuellen privaten Kommunikationsnetzes über ein geteiltes Kommunikationsmedium zwischen Endgeräten vorgeschlagen. Ein erstes Endgerät wird in einem Kommunikationsnetz authentifiziert. Das erste Endgerät sendet eine Anfrage mit Adressen von zweiten Endgeräten über das Kommunikationsnetz an eine Dienstzentrale. Die Dienstzentrale leitet die Anfrage an die zweiten Endgeräte. Kommunikationsparameter und Sicherheitsparameter werden zwischen dem ersten Endgerät und den zweiten Endgeräten ausgetauscht und über das geteilte Kommunikationsmedium wird ein gesichertes virtuelles Kommunikationsnetz zwischen den Endgeräten erstellt.

In der Patentanmeldung EP 1 271 896 wird ein Verfahren für mobile IP-Nodes in heterogenen Netzwerken beschrieben. Verfügbare Netzwerkschnittstellen des IP-Nodes werden mittels eines Schnittstellenverwaltungsmoduls in einer Lookup-Table abgespeichert. Der IP-Node greift auf eine permanente virtuelle IP-Netzwerkschnittstelle zu. Die permanente virtuelle IP-Netzwerkschnittstelle ist über das Schnittstellenverwaltungsmodul mit einem aktuellen Netzwerk verbunden. Bei einem Wechsel der physikalischen Netzwerkschnittstelle wird die Anbindung der permanenten virtuellen IP-Netzwerkschnittstelle basierend auf der Lookup-Table aktualisiert.

Es ist eine Aufgabe der vorliegenden Erfindung, ein neues Verfahren und ein neues System zum Erstellen einer optimierten Kommunikationsverbindung und/oder eines optimierten Kommunikationsnetzwerks zwischen mindestens zwei Kommunikationsendgeräten vorzuschlagen, welche nicht die Nachteile des Stands der Technik aufweisen. Das neue Verfahren und das neue System sollen insbesondere das Erstellen einer optimierten Kommunikationsverbindung und/oder eines optimierten Kommunikationsnetzwerks zwischen mehreren Kommunikationsendgeräten über ein geteiltes Kommunikationsmedium ausserhalb von zellulären Mobilfunknetzen ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zum Erstellen einer optimierten Kommunikationsverbindung und/oder eines optimierten Kommunikationsnetzwerks zwischen mindestens zwei mobilen Netzwerknodes ein erstes und ein zweites Schnittstellenverwaltungsmodul eines ersten und zweiten mobilen Netzwerknodes den entsprechenden mobilen Netzwerknode nach verfügbaren Netzwerkschnittstellen überprüft und eine erste und eine zweite Lookup-Tabelle mit verfügbaren Netzwerkschnittstellen des entsprechenden mobilen Netzwerknodes erstellt, dass auf der ersten und/oder zweiten Lookup-Tabelle basierte erste und/oder zweite Konfigurationsdaten des entsprechenden mobilen Netzwerknodes an eine Zentraleinheit übermittelt und in der Zentraleinheit gespeichert werden, wobei die ersten und/oder zweiten Konfigurationsdaten mindestens Kommunikationsparameter und/oder Sicherheitsparameter umfassen, dass erste und/oder zweite Konfigurationsdaten von der Zentraleinheit an den ersten und/oder zweiten mobilen Netzwerknode übertragen werden und dass basierend auf ersten und/oder zweiten Konfigurationsdaten mittels eines ersten und/oder eines zweiten Signalisierungsroutermoduls mindestens ein Signalisierungskanal zum Übertragen von Konfigurationsdaten über eine der verfügbaren Netzwerkschnittstellen erstellt wird, und dass basierend auf den ersten und/oder zweiten Konfigurationsdaten mittels einem ersten und/oder zweiten Datenroutermoduls mindestens ein Datenkanal über eine der verfügbaren Netzwerkschnittstellen erstellt wird. Insbesondere können die mobilen Netzwerknodes Netzwerkschnittstellen zu unterschiedlichen Netzen umfassen, wie z.B. Ethernet, Bluetooth, Mobilfunknetze (GSM: Global System for Mobile Communication, UMTS: Universal Mobile Telephone System etc.) oder WLAN (Wireless Local Area Network). Ein Vorteil der Erfindung ist, dass mittels geeigneter Netzwerkschnittstellen an spezifische Erfordernisse angepasste und somit optimierte Signalisierungskanäle als auch Datenkanäle konfigurierbar sind. Die Zentraleinheit kann beispielsweise als Modul eines HLR (Home Location Register) eines GSM Netzwerks ausgeführt sein. Sobald ein mobiler Netzwerknode Konfigurationsdaten an eine Zentraleinheit übermittelt hat, lässt sich zu diesem mobilen Netzwerknode von weiteren mobilen Netzwerknodes durch einen Abruf dieser Konfigurationsdaten eine optimierte Kommunikationsverbindung erstellen. Spezifische Erfordernisse bzw. Optimierungen können beispielsweise die Bandbreite und/oder die Kosten eines Datenkanals betreffen. Optimierungen können beispielsweise benutzerspezifisch und/oder benutzerkontrolliert und/oder automatisiert für die entsprechenden Parameter allgemein oder einzeln berücksichtigt werden. Dies war im Stand der Technik so in keiner Weise möglich.

In einer Ausführungsvariante werden für das Erstellen des mindestens einen Signalisierungskanals und/oder des mindestens einen Datenkanals unterschiedliche Netzwerkschnittstellen verwendet. Eine solche Ausführungsvariante hat insbesondere den Vorteil, dass der mindestens eine Signalisierungs- und/oder der mindestens eine Datenkanal über eine besonders geeignete Netzwerkschnittstelle, wie beispielsweise eine Netzwerkschnittstelle mit geeigneten Authentifizierungsmechanismen und/oder eine Netzwerkschnittstelle mit einer geeigneten Datenkapazität, aufgebaut werden kann.

In einer Ausführungsvariante werden erste und/oder zweite Konfigurationsdaten über eine der verfügbaren Netzwerkschnittstellen zwischen dem entsprechenden mobilen Netzwerknode und der Zentraleinheit übertragen. Eine solche Ausführungsvariante hat insbesondere den Vorteil, dass für die Übertragung von Konfigurationsdaten zwischen dem mobilen Netzwerknode und der Zentraleinheit bestehende Netzwerkinfrastrukturen verwendet werden können.

In einer weiteren Ausführungsvariante werden die Konfigurationsdaten zugriffskontrolliert auf der Zentraleinheit abgespeichert, wobei für einen Zugriff Zugriffsrequestdaten von mobilen Netzwerknodes für den Zugriff auf Konfigurationsdaten mittels eines Conditionalaccessmoduls der Zentraleinheit überprüft werden. Dabei können z.B. auch Verrechnungsdaten zur Verrechnung der mit dem Empfang der Konfigurationsdaten beanspruchten Leistung an einen Transactionsserver über das Netzwerk übermittelt werden. Diese Ausführungsvariante hat u.a. den Vorteil, dass das erfindungsgemässe Verfahren und System als Dienst in einem Netzwerk angeboten werden kann, z.B. als Teil von Diensten eines Serviceproviders, etc.. Zusätzlich kann z.B. mittels dieser Ausführungsvariante eine erhöhte Datensicherheit für die Netzwerkbenutzer sichergestellt werden.

In einer weiteren Ausführungsvariante wird die Übertragung von Konfigurationsdaten zwischen einem mobilen Netzwerknode und der Zentraleinheit mittels kryptographischer Verfahren authentifiziert und/oder verschlüsselt. Eine solche Ausführungsvariante hat insbesondere den Vorteil, dass beispielsweise die Berechtigung zur Übertragung von Konfigurationsdaten überprüfbar ist und dass beispielsweise Konfigurationsdaten vor einem Zugriff durch unberechtigte Geräte und/oder Personen schützbar sind.

In einer anderen Ausführungsvariante werden mobile Netzwerknodes vom entsprechenden Schnittstellenverwaltungsmodul zu bestimmbaren Zeitpunkten nach verfügbaren Netzwerkschnittstellen überprüft, wobei die entsprechenden Lookup-Tabellen aktualisiert werden. Diese Ausführungsvariante hat den Vorteil, dass Lookup-Tabellen stets auf dem aktuellsten Stand gehalten werden und sofort gemäss diesem aktuellen Stand verfügbar sind. Insbesondere kann durch ein ständiges Monitoring der Netzwerkschnittstellen und ihrer Eigenschaften z.B. automatisch zwischen Netzwerkschnittstellen gewechselt werden, falls Netzwerkschnittstellen mit besseren Eigenschaften als die der momentan aktiven Netzwerkschnittstelle verfügbar werden. Als Ausführungsvariante ist es auch möglich, dass sich die Kriterien für den automatischen Wechsel der Schnittstelle durch den Benutzer bestimmen lassen. Dies hat u.a. den Vorteil, dass der Benutzer sehr individuell und entsprechend seinen Bedürfnissen Schnittstellen konfigurieren kann.

In einer Ausführungsvariante werden erste und/oder zweite Konfigurationsdaten zu bestimmbaren Zeitpunkten und/oder bei einer Änderung der Lookup-Tabelle an die Zentraleinheit übertragen und/oder von der Zentraleinheit abgerufen und es wird basierend auf den übermittelten Konfigurationsdaten der mindestens eine Signalisierungskanal und/oder der mindestens eine Datenkanal dynamisch angepasst und/oder dynamisch gewechselt. Die Anpassung und/oder der Wechsel können wiederum als Ausführungsvariante auch anhand von durch den Benutzer festlegbarer Kriterien automatisch geschehen. Dies hat den Vorteil, dass der mobile Netzwerknode automatisch, je nach definierten Kriterien, stets die Schnittstelle mit z.B. dem momentan grössten verfügbaren Datendurchsatz und/oder mit dem besten Preis-Leistungsverhältnis und/oder der höchsten Sicherheit etc. für den Signalisierungskanal bzw. den Datenkanal benutzt. Insbesondere können Netzwerkschnittstellen auch dynamisch konfiguriert werden. Dies hat u.a. den Vorteil, dass z.B. eventuell vorhandene Services, wie z.B. ein DHCP (Dynamic Host Configuration Protocol) Service, genutzt werden können und die Handhabung für den Benutzer durch die Automatisierung der Konfiguration vereinfacht wird.

In einer Ausführungsvariante werden mehrere Signalisierungskanäle und/oder mehrere Datenkanäle aufgebaut, wobei den einzelnen Signalisierungs- und/oder Datenkanälen unterschiedliche Netzwerkschnittstellen und/oder unterschiedliche Kommunikationsparameter und/oder Sicherheitsparameter zuordbar sind. Eine solche Ausführungsvariante hat insbesondere den Vorteil, dass Signalisierungs- und/oder Datenkanäle über verschiedene Netzwerkschnittstellen erstellbar sind und somit beispielsweise bei sich bewegenden mobilen Netzwerknodes eine stark erhöhte Datenübertragungssicherheit erreichbar ist. Eine solche Ausführungsvariante hat auch den Vorteil, dass z.B. Datendurchsatz und/oder Sicherheit etc. durch die Verwendung von parallelen Signalisierungskanälen und/oder parallelen Datenkanälen weiter optimiert werden kann.

In einer anderen Ausführungsvariante umfassen die Konfigurationsdaten Parameter zur Bestimmung der Datensicherheit und/oder der Zuverlässigkeit und/oder der minimalen Durchsatzrate und/oder der Identifikation und/oder des Pagings und/oder der Authentifizierung des mindestens einen Signalisierungskanals und/oder des mindestens einen Datenkanals. Diese Ausführungsvariante hat u.a. den Vorteil, dass Netzwerkverbindungen bezüglich weiterer Kriterien optimierbar sind.

In einer weiteren Ausführungsvariante werden die verfügbaren Netzwerkschnittstellen mindestens teilweise dynamisch konfiguriert. Dies hat wie oben u.a. den Vorteil, dass eventuell vorhandene Services, wie z.B. ein DHCP (Dynamic Host Configuration Protocol) Service, genutzt werden können und die Handhabung für den Benutzer durch die Automatisierung der Konfiguration vereinfacht wird.

In einer wieder anderen Ausführungsvariante werden die verfügbaren Netzwerkschnittstellen mindestens teilweise statisch konfiguriert. Dies hat u.a. den Vorteil, dass die Konfiguration der Netzwerkschnittstellen für den Benutzer stets kontrollierbar und/oder überblickbar ist.

Bei allen oben genannten Ausführungsvarianten ist es in einer zusätzlichen Ausführungsvariante möglich, ausgehende Datenpakete in einem Datenbuffer des mobilen Netzwerknodes zu buffern, falls die Netzanbindung des mobilen Netzwerknodes unterbrochen wird, so dass die Outputdatenrate von einer oder mehreren Applikationen mittels des Datenpuffers aufrechterhalten oder innerhalb einer bestimmten Schwankungstoleranz gehalten wird. Der Vorteil dieser Ausführungsvariante ist u.a., dass bei einem Wechsel der physikalischen Schnittstelle die Outputdatenrate, z.B. einer Applikation, konstant bzw. innerhalb einer vorgegebenen Schwankungstoleranz gehalten werden kann, solange die Speicherkapazität des Datenpuffers zum Speichern der ausgehenden Datenpakete ausreicht. Dies hat wiederum den Vorteil, dass bei einem Unterbruch der Netzanbindung die Datendurchsatzrate durch die Applikationen oder den Kernel nicht heruntergefahren wird.

An dieser Stelle soll festgehalten werden, dass sich die vorliegende Erfindung neben dem erfindungsgemässen Verfahren auch auf ein System zur Ausführung dieses Verfahrens bezieht.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegte Figuren illustriert:

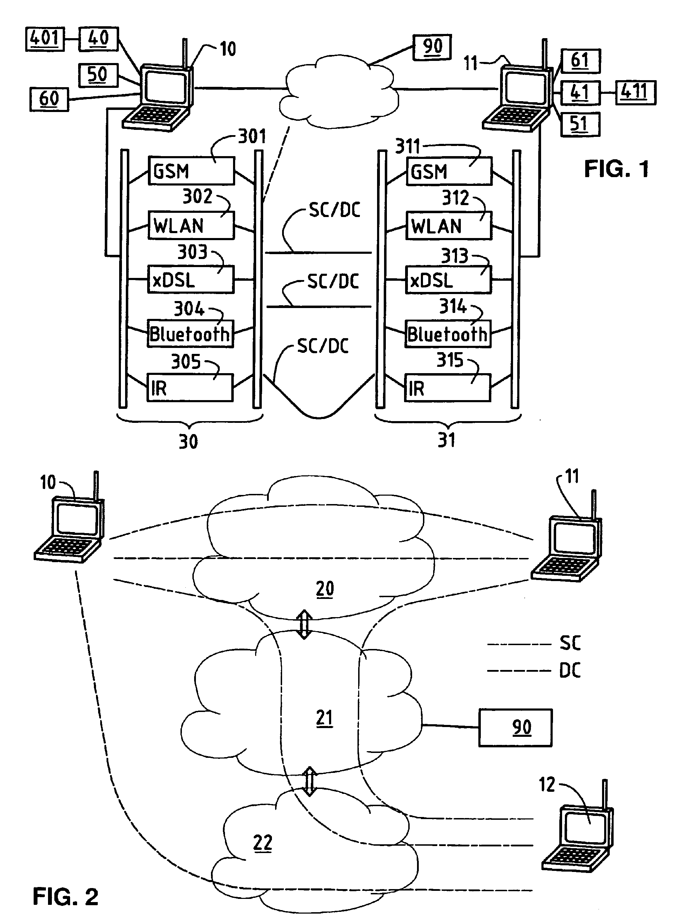

Figur 1 zeigt ein Blockdiagramm, welches schematisch ein Verfahren und ein System zum Erstellen einer optimierten Kommunikationsverbindung und/oder eines optimierten Kommunikationsnetzwerkes zwischen mindestens zwei mobilen Netzwerknodes 10,11 illustriert. Dabei werden der mindestens eine Signalisierungskanal und der mindestens eine Datenkanal separat aufgebaut und optimiert.
Figur 2 zeigt ein Blockdiagramm, welches ein Verfahren und ein System zum Erstellen einer optimierten Kommunikationsverbindung und/oder eines optimierten Kommunikationsnetzwerkes zwischen zwei und/oder mehreren mobilen Netzwerknodes 10,11,12,... illustriert. Das Bezugszeichen 90 gibt dabei die Zentraleinheit an, das Bezugszeichen SC gibt den mindestens einen Signalisierungskanal an und das Bezugszeichen DC gibt den mindestens einen Datenkanal an.

### Ausführungsform(en) der Erfindung

Figur 1 und Figur 2 illustrieren eine Architektur, die zur Realisierung der Erfindung verwendet werden kann. In der Figur 2 bezieht sich das Bezugszeichen SC auf einen Signalisierungskanal und das Bezugszeichen DC auf einen Datenkanal. Das Bezugszeichen 90 bezieht sich auf eine Zentraleinheit wie beispielsweise ein geeignet ausgeführtes Modul eines HLR (Home Location Register). Die mobilen Netzwerknodes 10,11,12,... verfügen dabei über die notwendige Infrastruktur, einschliesslich Hardware- und Softwarekomponenten, um ein beschriebenes erfindungsgemässes Verfahren und/oder System zu realisieren, insbesondere um die Verbindungen zu den Netzwerken 20,21,22,... über die vorhandenen Schnittstellen aufzubauen. Unter mobilen Netzwerknodes 10,11,12... sind u.a. alle möglichen so genannten Customer Premise Equipment (CPE) zu verstehen, die zur Benutzung an verschiedenen Netzwerkstandorten und/oder verschiedenen Netzwerken vorgesehen sind, wie beispielsweise tragbare Computer oder PDAs (Personal Digital Assistant). Die mobilen CPEs oder Netzwerknodes 10,11,12,... können ein oder mehrere verschiedene Netzwerkschnittstellen 30 besitzen, die auch mehrere unterschiedliche Netzwerkstandards 301,302,303,... bzw. 311,312,313,... unterstützen können. Die Netzwerkschnittstellen 30,31 eines mobilen Netzwerknodes 10,11,12,... können z.B. Schnittstellen zu Ethernet oder einem anderen Wired LAN (Local Area Network), Bluetooth 304,314, GSM (Global System for Mobile Communication) 301,311, GPRS (Generalized Packet Radio Service), USSD (Unstructured Supplementary Services Data), UMTS (Universal Mobile Telecommunications System) und/oder WLAN (Wireless Local Area Network) 302,312, xDSL (Digital Subscriber Line) 303,313, IR (InfraRed) 305,315 etc. umfassen. Die Referenznummern 20,21,22,... stehen dementsprechend für die verschiedenen heterogenen Netzwerke, wie z.B. einem Wired LAN, d.h. einem lokalen Festnetz, insbesondere auch dem PSTN (Public Switched Telephone Network) etc., einem Bluetooth-Netzwerk, z.B. für Installationen in überdachten Örtlichkeiten, ein Mobilfunknetz mit GSM und/oder UMTS etc. oder einem Wireless LAN. Die Schnittstellen 30,31 können nicht nur packet-switched Schnittstellen, wie sie von Netzwerkprotokollen wie z.B. Ethernet oder Tokenring direkt benutzt werden, sondern auch circuit-switched Schnittstellen sein, welche circuit Schnittstellen mittels Protokollen, wie z.B. PPP (Point to Point Protocol), SLIP (Serial Line Internet Protocol) oder GPRS (Generalized Packet Radio Service) benutzt werden können, d.h. welche Schnittstellen z.B. keine Netzwerkadresse, wie eine MAC- oder eine DLC-Adresse besitzen. Die Referenznummer 20 kann z.B. das gewohnte, weltweite IP-Backbone-Netzwerk bezeichnen. Wie erwähnt, kann die Kommunikation z.B. auch über ein Mobilfunknetz 21 wie GSM oder UMTS erfolgen, beispielsweise auch mittels speziellen Kurzmeldungen, z.B. SMS (Short Message Services), EMS (Enhanced Message Services), über einen Signalisierungskanal, wie z.B. USSD (Unstructured Supplementary Services Data) oder andere Techniken, wie MExE (Mobile Execution Environment), GPRS (Generalized Packet Radio Service), WAP (Wireless Application Protocol) oder UMTS (Universal Mobile Telecommunications System) oder über einen Nutzkanal.

Zum Erstellen einer Kommunikationsverbindung SC/DC und/oder eines Kommunikationsnetzwerkes SC/DC zwischen mobilen Netzwerknodes 10,11,12,... überprüft ein entsprechendes Schnittstellenverwaltungsmodul 40,41 den mobilen Netzwerknode 10,11,12,... nach verfügbaren Netzwerkschnittstellen 30,31 und erstellt eine Lookup-Tabelle 401,411 mit verfügbaren Netzwerkschnittstellen 30,31. Wie erwähnt werden die Netzwerkschnittstellen 30,31 durch ein Schnittstellenverwaltungsmodul 40,41 verwaltet. Die Netzwerkschnittstellen 30,31 können physikalische Schnittstellen sein oder z.B. durch das Schnittstellenverwaltungsmodul 40,41 softwaremässig generierte d.h. virtuelle Schnittstellen sein. Das Schnittstellenverwaltungsmodul 40,41 bindet sich nach der Überprüfung des mobilen Netzwerknodes 10,11,12 nach verfügbaren Netzwerkschnittstellen an eine der verfügbaren Netzwerkschnittstellen 30,31 an. Die Überprüfung der Netzwerkschnittstellen 30,31 kann z.B. zu bestimmbaren Zeitpunkten oder periodisch, d.h. nach Ablauf eines bestimmbaren Zeitfensters, geschehen, manuell konfigurierbar sein oder auf Request beispielsweise eines Kernels des mobilen Netzwerknodes 10,11,12. Die Lookup-Tabelle 401,411 kann insbesondere Informationen, wie mögliche Datendurchsatzrate, Netzverfügbarkeit, Netzstabilität, Kosten der Netzbenutzung etc. umfassen. Die Anbindung an eine bestimmte Schnittstelle 30,31 kann anhand bestimmbarer Kriterien basierend auf in der Lookup-Tabelle gespeicherten Informationen erfolgen. Insbesondere kann es sinnvoll sein, dass das Schnittstellenverwaltungsmodul 40,41 die Schnittstelle 30,31 automatisch basierend auf Informationen der Lookup-Tabelle wechselt und aktualisiert. Die Anbindung an eine bestimmte Schnittstelle 30,31 kann aber auch z.B. durch den Benutzer bestimmbar sein und/oder manuell erfolgen. Die verfügbaren Netzwerkschnittstellen 30,31 können dynamisch konfiguriert werden, z.B. mittels einem DHCP-Service (DHCP: Dynamic Host Configuration Protocol), falls solche Mittel verfügbar sind, oder statisch, z.B. durch den Benutzer oder anhand vorgegebener Konfigurationsprofile. Über eine aktuelle Netzwerkschnittstelle können z.B. ein oder mehrere IP-Applikationen des mobilen Netzwerknodes 10,11,12,... auf die heterogenen Netzwerke 21,21,22,... zugreifen.

Anschliessend werden auf den Lookup-Tabellen 401,411 basierte Konfigurationsdaten mit Kommunikationsparametern und/oder Sicherheitsparametern zwischen den entsprechenden Netzwerknodes 10, 11 und einer Zentraleinheit 90 übermittelt. Die Übermittlung kann auf irgendeinem geeigneten Kommunikationskanal basieren, beispielsweise kann ein auf einem GSM-Mobilfunknetz basierter Kommunikationskanal verwendet werden. Die übermittelten Konfigurationsdaten werden in der Zentraleinheit 90 gespeichert und können danach über irgendeinen geeigneten Kommunikationskanal wie beispielsweise wieder einem auf einem GSM-Mobilfunknetz basierten Kommunikationskanal von der Zentraleinheit 90 auf einen mobilen Netzwerknode 10, 11 übertragen werden. Somit kann beispielsweise ein erster mobiler Netzwerknode 10 auf einer ersten Lookup-Tabelle basierte erste Konfigurationsdaten an die Zentraleinheit 90 übermitteln und ein zweiter mobiler Netzwerknode 11 kann die ersten Konfigurationsdaten von der Zentraleinheit auf den zweiten Netzwerknode 11 übertragen. Die mobilen Netzwerknodes 10, 11 und/oder die Zentraleinheit 90 können zusätzliche Authentifizierungs-Module und/oder Verschlüsselungs-Module zur sicheren Übertragung von Konfigurationsdaten zwischen den mobilen Netzwerknodes und der Zentraleinheit 90 umfassen.

Basierend auf Daten von Lookup-Tabellen 401,411 und/oder auf Kommunikationsparametem und/oder Sicherheitsparametem wird mittels eines Signalisierungsroutermoduls 50,51 sowie eines Datenroutermoduls 60,61 ein Signalisierungskanal SC sowie ein Datenkanal DC zwischen dem ersten mobilen Netzwerknode 10 und dem zweiten mobilen Netzwerknode 11 aufgebaut. Nach dem Aufbau des Signalisierungskanals SC zur Übermittlung von weiteren Konfigurationsdaten kann beispielsweise die Zentraleinheit 90 entlastet und für andere Anwendungen freigegeben werden. Wie insbesondere aus Figuren 1 und 2 hervorgeht, können der Signalisierungskanal SC und der Datenkanal DC basierend auf unterschiedlichen Kriterien über unterschiedliche Netzwerkschnittstellen 30,31 und Netzwerkstandarde 301,302,303,304,305,... und 311,312,313,314,315,... aufgebaut werden. Natürlich ist klar, dass, falls die Kriterien sinnvoll sind, der Signalisierungskanal SC und der Datenkanal DC über die gleiche Netzanbindung erfolgen kann. Wechselt der mobile Netzwerknode 10,11,12 die Netzwerkschnittstelle 30,31 oder seinen topologischen Standort im Netz, kann die Anbindung an die Netzwerkschnittstelle 30,31 basierend auf den Informationen der Lookup-Tabelle über das Schnittstellenverwaltungsmodul 40,41 aktualisiert werden. Für den Datenkanal DC kann z.B. ein Mobile IP-Modul bei einem Wechsel der Netzwerkschnittstelle 30,31 die Verwaltung der IP-Adressen übernehmen. Ebenso kann ein IPsec-Modul z.B. eine IPsec-Datentunnelkonfiguration gemäss der aktuellen Netzanbindung aktualisieren, worauf das Mobile IP-Modul die neue Care-of-Adresse beim Home-Agenten registriert, so dass das Routing der Datenpakete zum neuen Standort bzw. zur neuen Netzwerkanbindung des mobilen Netzwerknodes 10,11,12,... stattfindet und aktualisiert die IP-Konfiguration, falls notwendig, beim Home-Agenten entsprechend der momentanen aktuellen Netzwerkschnittstelle oder Netzwerkschnittstellen. Die oben genannte Reihenfolge ist erfindungsgemäss, der Ablauf kann aber auch in umgekehrter Folge stattfinden.

Wie oben beschrieben kann z.B. das entsprechende Schnittstellenverwaltungsmodul 40,41 den ersten und/oder den zweiten mobilen Netzwerknode 10, 11 nach verfügbaren Netzwerkschnittstellen 30,31 periodisch oder zu bestimmbaren Zeitpunkten überprüfen und die jeweilige Lookup-Tabelle 401,411 aktualisieren. Die Übertragung von Konfigurationsdaten zwischen den mobilen Netzwerknodes 10, 11 und der Zentraleinheit 90 kann ebenfalls zu bestimmbaren Zeitpunkten oder nach einer Änderung einer Lookup-Tabelle erfolgen. Ebenso kann z.B. mittels des Signalisierungsroutermoduls 50,51 basierend auf der ersten und/oder zweiten Lookup-Tabelle 401,411 und/oder auf den Kommunikationsparametem der Signalisierungskanal SC dynamisch angepasst und/oder gewechselt werden.

Es ist wichtig, darauf hinzuweisen, dass gemäss der Erfindung auch z.B. weitere Signalisierungskanäle SC basierend auf der ersten und/oder zweiten Lookup-Tabelle 401,411 und/oder auf den Konfigurationsdaten aufgebaut werden können. Die einzelnen Signalisierungskanäle SC können dabei unterschiedlichen Kommunikationsparametem und/oder Sicherheitsparametem zugeordnet sein. Die Konfigurationsdaten können periodisch und/oder bei Änderung der Lookup-Tabelle 401,411 übermittelt werden und basierend auf den übermittelten Konfigurationsdaten die ein oder mehreren Signalisierungskanäle SC und/oder ein oder mehreren Datenkanäle DC dynamisch geroutet werden. Beide mobilen Netzwerknodes 10, 11 können einen Fallbacksignalisierungskanal umfassen, wobei der Fallbacksignalisierungskanal bei Unterbrechung von einem oder mehreren Signalisierungskanälen SC als temporärer Signalisierungskanal SC verwendet wird. Die Konfigurationsdaten können weiter z.B. Parameter zur Bestimmung der Datensicherheit und/oder der Zuverlässigkeit und/oder der minimalen Durchsatzrate und/oder der Identifikation und/oder des Paging und/oder der Authentifizierung eines Signalisierungskana-Is SC umfassen. Die verfügbaren Netzwerkschnittstellen 30,31 können einseitig oder beidseitig mindestens teilweise dynamisch und/oder statisch konfiguriert werden.

Es bleibt zu erwähnen, dass in einem erweiterten Ausführungsbeispiel zum oben genannten Ausführungsbeispiel ausgehende Datenpakete in einem Datenpuffer des mobilen Netzwerknodes 10,11,12 gepuffert werden, falls die Netzanbindung des mobilen Netzwerknodes 10,11,12 unterbrochen wird, so dass die Outputdatenrate von z.B. zur Zeit angebundenen IP-Applikationen mittels des Datenpuffers aufrechterhalten oder innerhalb einer bestimmten Schwankungstoleranz gehalten wird, d.h. solange die Speicherkapazität des Datenbuffers zum Speichern der Datenpakete ausreicht. Falls der Netzwerkanbindungsunterbruch so innerhalb des z.B. im TCP vorgesehenen Zeitfensters für ein Verbindungs-Timeout liegt, kann die Outputdatenrate z.B. für IP-Applikationen so gehalten werden, dass keine automatische Verzögerung der Outputrate durch die IP-Applikationen stattfindet. Die Speicherung der Datenpakete kann z.B. kontinuierlich gleich oder gemäss der Zeitdauer des Unterbruchs stetig langsamer stattfinden. Es ist darauf hinzuweisen, dass gerade bei Realtime-Applikationen der Datenpuffer eine wichtige Rolle spielen kann, um bei einem Wechsel des topologischen Netzwerkstandortes Unterbrüche und Datenverlust zu minimieren. Der Datenpuffer kann in einem Ausführungsbeispiel hardware- oder softwaremässig einer Netzwerkschnittstelle 30,31 zugeordnet oder integriert realisiert sein, er kann aber auch separat im mobilen Netzwerknode 10, 11 realisiert sein.

Es ist als Ausführungsvariante möglich, dass der mobile Netzwerknode 10, 11 über zwei oder mehrere Netzwerkschnittstellen 30,31 gleichzeitig das gleiche Datenpaket erhalten kann. Dies gilt sowohl für den Signalisierungskanal SC als auch für den Datenkanal DC. Redundante Datenpakete werden in höheren Layern dann automatisch erkannt und entsprechend reduziert. Durch das gleichzeitige Verschicken von Datenpaketen und das parallele Erhalten der gleichen Datenpakete durch zwei unterschiedliche Netzwerkschnittstellen 30,31 kann z.B. der nahtlose Übergang von einer Schnittstelle 30,31 zu einer anderen durch den mobilen Netzwerknode 10 gewährleistet werden. Bei Verwendung von Mobile IP können beispielsweise beim Signalisierungskanal SC und/oder beim Datenkanal DC für einen mobilen Netzwerknode 10 mindestens zwei Care-of-Adressen entsprechend den momentan angebundenen aktuellen Netzwerkschnittstellen 30,31 zugeordnet sein. Sind mehr als zwei Netzwerkschnittstellen 30,31 gleichzeitig angebunden, erhöht sich die Anzahl zugeordneter Care-of-Adressen entsprechend. Der Home-Agent routet die IP-Datenpakete, welche die Home-Adresse des mobilen Netzwerknodes 10 im IP-Header besitzen, entsprechend der genannten Mehrfach-Registrierung parallel an die verschiedenen registrierten Care-of-Adressen, d.h. an verschiedene Netzwerkschnittstellen des mobilen Netzwerknodes 10,11,12.

Wie erwähnt können die Konfigurationsdaten z.B. zugriffskontrolliert auf der Zentraleinheit abgespeichert sein, wobei für einen Zugriff Zugriffsrequestdaten von mobilen Netzwerknodes für den Zugriff auf Konfigurationsdaten mittels eines Conditionalaccessmoduls der Zentraleinheit überprüft werden. Dabei können z.B. auch Verrechnungsdaten zur Verrechnung der mit dem Empfang der Konfigurationsdaten beanspruchten Leistung an einen Transactionsserver über das Netzwerk übermittelt werden. Diese hat u.a. den Vorteil, dass das erfindungsgemässe Verfahren und System als Dienst in einem Netzwerk angeboten werden kann, z.B. als Teil von Diensten eines Serviceproviders, etc.. Zusätzlich kann z.B. mittels dieser Ausführungsvariante eine erhöhte Datensicherheit für die Netzwerkbenutzer sichergestellt werden.

Zur Realisierung des Conditional Access, d.h. des Zugriffs auf die gewünschten einzelnen oder mehreren zugriffskontrollierten Daten in der Zentraleinheit 90, können z.B. die im ETSI-Standard (European Telecommunications Standards Institute) definierten Mechanismen für zugriffskontrollierte Programme und/oder Daten(-dienste), der sogenannte Conditional Access, oder andere Verfahren verwendet werden. Z.B. werden im oben genannten ETSI-Standard Scrambling/Descrambling-Prozeduren (Verschlüsselung/Entschlüsselung), Parameter für die Signalisierung und Synchronisation des Conditional Access sowie Mechanismen für die Kontrolle und Verteilung von Berechtigungen (Berechtigungsdaten für Benutzer) durch die Übermittlung von sogenannten ECM-Meldungen (Entitlement Checking Messages) und EMM-Meldungen (Entitlement Management Messages) beschrieben. Gemäss den oben genannten ETSI-Standards können z.B. EMM-Meldungen an einen spezifischen, durch eine eindeutige Kundenadresse identifizierten Kunden (Benutzer), an eine kleine, durch eine Gruppenadresse identifizierte Gruppe von Kunden (Benutzern), an eine grosse, durch eine Kollektivadresse identifizierte Gruppe von Kunden (Benutzern) oder an sämtliche Kunden übermittelt werden. Gemäss dem ETSI-Standard können die Kundenadressen im Access Control System (Zugriffskontrollmodul) gespeichert und vom Access Control System an das für den Empfang von EMM-Meldungen zuständige EMM-Empfangsmodul der Empfangsvorrichtungen 10 übertragen werden, so dass dieses EMM-Empfangsmodul nur solche EMM-Meldungen an das Access Control System weiterleitet, die eine Kundenadresse enthalten, die mit einer der vom Access Control System erhaltenen Kundenadresse übereinstimmen. In einer Ausführungsvariante kann z.B. ein ECM-/EMM-Mechanismus vorgesehen sein, der die Benutzeridentifikation via IMSUMSISDN oder ähnlichen Identifikationsmitteln vom Mobilfunksystem verwendet, um die Conditional Access-Verrechnung derart zu ermöglichen.

Die mit dem Empfang der Konfigurationsdaten beanspruchten Leistungen können z.B. mittels an einen Transactionsserver über das Mobilfunknetz übermittelten Verrechnungsdaten verrechnet werden. Die Leistungen können aber auch beispielsweise über wiederaufladbare (anonyme) Chipkarten, die in eine von möglicherweise mehreren Karteneinführstellen der mobilen Netzwerknodes eingeführt werden, verbucht werden, wobei ein entsprechender Geldbetragswert vom dort gespeicherten Geldbetragswert subtrahiert oder zu diesem addiert wird. Das Conditionalaccessmodul, ein Financialserver, sowie der Transactionserver können z.B. jeweils mehrere Softwaremodule umfassen und sind auf einem gemeinsamen Computer oder mehreren Computern ausgeführt. Sind mehrere der Server auf einem gemeinsamen Computer ausgeführt, so erfolgt der Datenaustausch zwischen jeweiligen Servern beispielsweise über eine Softwareschnittstelle. Wenn zwei der Server auf verschiedenen Computern ausgeführt sind, erfolgt der Datenaustausch zwischen diesen Servern z.B. über ein Kommunikationsnetz, beispielsweise ein Festnetz, wie z.B. das öffentlich geschaltete Telefonnetz (PSTN: Public Switched Telephone Network), ein ISDN-Netz (Integrated Services Digital Network) oder eine andere Kommunikationsverbindung. Entsprechende Kommunikationsfunktionen sind in den Servern in Kommunikationmodulen realisiert, wobei diese Module softwaremässig realisierte Kommunikationsprotokolle und/oder Hardwarekomponente für die Kommunikation über das betreffende Kommunikationsnetz umfassen. Die Kommunikationsmodule des Financialservers umfassen zudem die erforderlichen softwaremässig realisierten Kommunikationsprotokolle und/oder Hardwarekomponente für die Kommunikation mit der Zentraleinheit 90 über eine Kommunikationsverbindung, z.B. das oben erwähnte Kommunikationsnetz, wie beispielsweise ein Festnetz etc., wobei die Zentraleinheit 90 ihrerseits mit entsprechenden Kommunikationsmodulen ausgestattet ist.

## Patentansprüche

1. Verfahren zum Erstellen einer optimierten Kommunikationsverbindung (SC/DC) und/oder eines optimierten Kommunikationsnetzwerks (SC/DC) zwischen mindestens zwei mobilen Netzwerknodes (10, 11), wobei ein erstes und ein zweites Schnittstellenverwaltungsmodul (40,41) eines ersten und zweiten mobilen Netzwerknodes (10, 11) den entsprechenden mobilen Netzwerknode nach verfügbaren Netzwerkschnittstellen (30,31) überprüft und eine erste und eine zweite Lookup-Tabelle (401,411) mit verfügbaren Netzwerkschnittstellen (30, 31) des entsprechenden mobilen Netzwerknodes erstellt, wobei auf der ersten und/oder zweiten Lookup-Tabelle (401,411) basierte erste und/oder zweite Konfigurationsdaten des entsprechenden mobilen Netzwerknodes (10,11) über einen Kommunikationskanal an eine Zentraleinheit (90) übermittelt und in der Zentraleinheit (90) zugreifbar gespeichert werden, wobei die ersten und/oder zweiten Konfigurationsdaten mindestens Kommunikationsparameter und/oder Sicherheitsparameter umfassen, wobei erste und/oder zweite Konfigurationsdaten von der Zentraleinheit (90) über einen Kommunikationskanal an den ersten und/oder zweiten mobilen Netzwerknode (10, 11) übertragen werden, **dadurch gekennzeichnet,**
**dass** basierend auf ersten und/oder zweiten Konfigurationsdaten mittels eines ersten und/oder eines zweiten Signalisierungsroutermoduls (50,51) des entsprechenden mobilen Netzwerknodes mindestens ein Signalisierungskanal (SC) zwischen den mobilen Netzwerknodes zum Übertragen von Konfigurationsdaten über eine der verfügbaren Netzwerkschnittstellen (30,31) erstellt wird, und
**dass** basierend auf den ersten und/oder zweiten Konfigurationsdaten mittels einem ersten und/oder zweiten Datenroutermoduls (60, 61) des entsprechenden mobilen Netzwerknodes mindestens ein Datenkanal (DC) zwischen den mobilen Netzwerknodes über eine der verfügbaren Netzwerkschnittstellen (30, 31) erstellt wird.

2. Verfahren nach Anspruch 1, **dadurch gekennzeichnet, dass** für den Aufbau des mindestens einen Signalisierungskanals (SC) und/oder für den Aufbau des mindestens einen Datenkanals (DC) unterschiedliche Netzwerkschnittstellen (30,31) verwendet werden.

3. Verfahren nach einem der Ansprüche 1 bis 2, **dadurch gekennzeichnet, dass** erste und/oder zweite Konfigurationsdaten über eine der verfügbaren Netzwerkschnittstellen (30, 31) zwischen dem entsprechenden mobilen Netzwerknode und der Zentraleinheit (90) übertragen werden.

4. Verfahren nach einem der Ansprüche 1 bis 3, **dadurch gekennzeichnet, dass** die Konfigurationsdaten zugriffskontrolliert auf der Zentraleinheit (90) abgespeichert werden, wobei Zugriffsrequestdaten von mobilen Netzwerknodes für den Zugriff auf Konfigurationsdaten mittels eines Conditionalaccessmoduls der Zentraleinheit (90) überprüft werden.

5. Verfahren nach Anspruch 4, **dadurch gekennzeichnet, dass** Verrechnungsdaten zur Verrechnung der mit dem Empfang der Konfigurationsdaten beanspruchten Leistung an einen Transactionsserver über das Netzwerk übermittelt werden.

6. Verfahren nach einem der Ansprüche 1 bis 5, **dadurch gekennzeichnet, dass** die Übertragung von Konfigurationsdaten zwischen einem mobilen Netzwerknode (10,11) und der Zentraleinheit (90) mittels kryptographischer Verfahren authentifiziert und/oder verschlüsselt wird.

7. Verfahren nach einem der Ansprüche 1 bis 6, **dadurch gekennzeichnet, dass** das erste und/oder das zweite Schnittstellenverwaltungsmodul (40,41) den entsprechenden mobilen Netzwerknode (10,11) zu bestimmbaren Zeitpunkten nach verfügbaren Netzwerkschnittstellen (30,31) überprüft und die entsprechende Lookup-Tabelle (401,411) aktualisiert.

8. Verfahren nach einem der Ansprüche 1 bis 7, **dadurch gekennzeichnet, dass** erste und/oder zweite Konfigurationsdaten zu bestimmbaren Zeitpunkten und/oder bei einer Änderung der Lookup-Tabelle an die Zentraleinheit (90) übertragen und/oder von der Zentraleinheit (90) abgerufen werden und dass basierend auf den übermittelten Konfigurationsdaten der mindestens eine Signalisierungskanal (SC) und/oder der mindestens eine Datenkanal (DC) dynamisch angepasst und/oder dynamisch gewechselt wird.

9. Verfahren nach einem der Ansprüche 1 bis 8, **dadurch gekennzeichnet, dass** mehrere Signalisierungskanäle (SC) und/oder mehrere Datenkanäle (DC) aufgebaut werden, wobei den einzelnen Signalisierungskanälen (SC) und/oder den einzelnen Datenkanälen (DC) unterschiedliche Netzwerkschnittstellen (30,31) und/oder Kommunikationsparameter und/oder Sicherheitsparameter zuordenbar sind.

10. Verfahren nach einem der Ansprüche 1 bis 9, **dadurch gekennzeichnet, dass** die Konfigurationsdaten Parameter zur Bestimmung der Datensicherheit und/oder der Zuverlässigkeit und/oder der minimalen Durchsatzrate und/oder der Identifikation und/oder des Pagings und/oder der Authentifizierung des mindestens einen Signalisierungskanals (SC) und/oder des mindestens einen Datenkanals (DC) umfassen.

11. Verfahren nach einem der Ansprüche 1 bis 10, **dadurch gekennzeichnet, dass** Netzwerkschnittstellen (30,31) mindestens teilweise dynamisch konfiguriert werden.

12. Verfahren nach einem der Ansprüche 1 bis 10, **dadurch gekennzeichnet, dass** Netzwerkschnittstellen (30,31) mindestens teilweise statisch konfiguriert werden.

13. Verfahren nach einem der Ansprüche 1 bis 12, **dadurch gekennzeichnet, dass** ausgehende Datenpakete in einem Datenpuffer des mobilen Netzwerknodes (10,11) gepuffert werden, falls die Netzanbindung des mobilen Netzwerknodes (10,11) unterbrochen wird, so dass die Outputdatenrate von angebundenen Applikationen mittels des Datenpuffers aufrechterhalten oder innerhalb einer bestimmten Schwankungstoleranz gehalten wird.

14. System zum Erstellen einer optimierten Kommunikationsverbindung (SC/DC) und/oder eines optimierten Kommunikationsnetzwerks (SC/DC) zwischen mindestens zwei Netzwerknodes (10,11), wobei ein erster und ein zweiter Netzwerknode (10,11) ein entsprechendes erstes und zweites Schnittstellenverwaltungsmodul (40,41) umfassen, wobei das erste und das zweite Schnittstellenverwaltungsmodul (40,41) Mittel zum Überprüfen des entsprechenden Netzwerknodes (10,11) nach verfügbaren Netzwerkschnittstellen (30,31) und ein entsprechendes Speichermodul mit einer ersten und einer zweiten Lookup-Tabelle (401,411) zum Speichern von Daten betreffend der verfügbaren Netzwerkschnittstellen (30,31) umfassen,wobei der erste und der zweite mobile Netzwerknode (10,11) Mittel zur Übertragung über ein Kommunikationskanal von auf der ersten und/oder zweiten Lookup-Tabelle (401,411) basierten ersten und/oder zweiten Konfigurationsdaten an eine Zentraleinheit (90) umfassen, wobei die Zentraleinheit (90) Mittel zur Speicherung von ersten und/oder zweiten Konfigurationsdaten umfasst, wobei die mobilen Netzwerknodes (10,11) und die Zentraleinheit (90) Mittel zur Übertragung über ein Kommunikationskanal von Konfigurationsdaten von der Zentraleinheit (90) an den ersten und/oder zweiten Netzwerknode (10,11) umfassen, **dadurch gekennzeichnet,**
**dass** mittels eines ersten und/oder zweiten Signalisierungsroutermoduls (50,51) des ersten und/oder zweiten Netzwerknodes (10,11) basierend auf ersten und/oder zweiten Konfigurationsdaten mindestens ein Signalisierungskanal (SC) zwischen den mobilen Netzwerknodes zum Übertragen von Konfigurationsdaten über eine der verfügbaren Netzwerkschnittstellen (30,31) erstellbar ist, und
**dass** der erste und/oder der zweite Netzwerknode (10,11) ein erstes und/oder ein zweites Datenroutermodul (60,61) umfasst, wobei mittels des ersten und/oder zweiten Datenroutermoduls (60,61) basierend auf ersten und/oder zweiten Konfigurationsdaten mindestens ein Datenkanal (DC) zwischen den mobilen Netzwerknodes über eine der verfügbaren Netzwerkschnittstellen (30,31) erstellbar ist.

15. System nach Anspruch 14, **dadurch gekennzeichnet, dass** für das Erstellen des mindestens einen Signalisierungskanals (SC) und/oder für das Erstellen des mindestens einen Datenkanals (DC) unterschiedliche Netzwerkschnittstellen (30,31) verwendbar sind.

16. System nach einem der Ansprüche 14 bis 15, **dadurch gekennzeichnet, dass** erste und/oder zweite Konfigurationsdaten über eine der Netzwerkschnittstellen (30,31) zwischen dem ersten und/oder zweiten Netzwerknode (10, 11) und der Zentraleinheit (90) übertragbar sind.

17. System nach Anspruch 16, **dadurch gekennzeichnet, dass** der erste und/oder der zweite Netzwerknode (10,11) und die Zentraleinheit (90) Authentifizierungs-Module und/oder Verschlüsselungs-Module umfassen.

18. System nach einem der Ansprüche 14 bis 17, **dadurch gekennzeichnet, dass** mehrere Signalisierungskanäle (SC) und/oder mehrere Datenkanäle (DC) erstellbar sind, wobei den einzelnen Signalisierungskanälen (SC) und/oder den einzelnen Datenkanälen (DC) unterschiedliche Netzwerkschnittstellen (30) und/oder Kommunikationsparameter und/oder Sicherheitsparameter zuordenbar sind.

19. System nach einem der Ansprüche 14 bis 18, **dadurch gekennzeichnet, dass** mittels des entsprechenden Schnittstellenverwaltungsmoduls (40,41) der erste und /oder der zweite mobile Netzwerknode (10,11) zu bestimmbaren Zeitpunkten nach verfügbaren Netzwerkschnittstellen (30,31) überprüfbar ist, wobei die entsprechende Lookup-Tabelle (401,411) aktualisierbar ist.

20. System nach einem der Ansprüche 14 bis 19, **dadurch gekennzeichnet, dass** mittels eines Signalisierungsroutermoduls (50,51) und/oder Datenroutermoduls (60,61) basierend auf ersten und/oder zweiten Konfigurationsdaten der mindestens eine Signalisierungskanal (SC) und/oder der mindestens eine Datenkanal (DC) dynamisch anpassbar und/oder wechselbar ist.

## Claims

1. Method for creating an optimised communication link (SC/DC) and/or an optimised communication network (SC/DC) between at least two mobile network nodes (10,11), a first and a second interface administration module (40,41) of a first and second mobile network node (10,11) checking the corresponding mobile network node for available network interfaces (30,31), and generating a first and a second look-up table (401,411) with available network interfaces (30,31) of the corresponding mobile network node, based on the first and/or second look-up table (401,411), first and/or second configuration data of the corresponding mobile network node (10,11) being transmitted over a communication channel to a central unit (90) and being stored in an accessible way in the central unit (90), the first and/or second configuration data comprising at least communication parameters and/or security parameters, first and/or second configuration data being transmitted from the central unit (90) over a communication channel to the first and/or second mobile network node (10,11), **characterised in that**
based on first and/or second configuration data, by means of a first and/or a second signalling router module (50,51) of the corresponding mobile network node, at least one signalling channel (SC) is created between the mobile network nodes for transmission of configuration data via one of the available network interfaces (30,31), and
based on the first and/or second configuration data, by means of a first and/or second data router module (60,61) of the corresponding mobile network node, at least one data channel (DC) is created between the mobile network nodes via one of the available network interfaces (30,31).

2. Method according to claim 1, **characterised in that** different network interfaces (30,31) are used for setting up the at least one signalling channel (SC) and/or for creating the at least one data channel (DC).

3. Method according to one of the claims 1 to 2, **characterised in that** first and/or second configuration data are transmitted between the corresponding mobile network node and the central unit (90) via one of the available network interfaces (30,31).

4. Method according to one of the claims 1 to 3, **characterised in that** the configuration data are stored in the central unit (90) in an access-controlled way, access request data from mobile network nodes for access to configuration data being checked by means of a conditional access module of the central unit (90).

5. Method according to claim 4, **characterised in that** billing data for billing for services availed of with the receiving of configuration data are transmitted over the network to a transaction server.

6. Method according to one of the claims 1 to 5, **characterised in that** the transmission of configuration data between a mobile network node (10,11) and the central unit (90) is authenticated and/or encrypted by means of cryptographic methods.

7. Method according to one of the claims 1 to 6, **characterised in that** the first and/or the second interface administration module (40,41) checks the corresponding mobile network node (10,11) at definable points in time for available network interfaces (30,31), and updates the corresponding look-up table (401,411).

8. Method according to one of the claims 1 to 7, **characterised in that** at definable points in time and/or with a change in the look-up table, first and/or second configuration data are transmitted to the central unit (90), and/or called up from the central unit (90), and, based on the transmitted configuration data, the at least one signalling channel (SC) and/or the at least one data channel (DC), are dynamically adapted and/or dynamically changed.

9. Method according to one of the claims 1 to 8, **characterised in that** a multiplicity of signalling channels (SC) and/or a multiplicity of data channels (DC) are established, different network interfaces (30,31) and/or communication parameters and/or security parameters being assignable to the individual signalling channels (SC) and/or to the individual data channels (DC).

10. Method according to one of the claims 1 to 9, **characterised in that** the configuration data comprise parameters for determining the data security and/or the reliability and/or the minimal throughput rate and/or the identification and/or the paging and/or the authentication of the at least one signalling channel (SC) and/or of the at least one data channel (DC).

11. Method according to one of the claims 1 to 10, **characterised in that** network interfaces (30,31) are configured at least partially dynamically.

12. Method according to one of the claims 1 to 10, **characterised in that** network interfaces (30,31) are configured at least partially statically.

13. Method according to one of the claims 1 to 12, **characterised in that** outgoing data packets are buffered in a data buffer of the mobile network node (10,11), so that the output data rate of connected applications is maintained by means of the data buffer, or kept within a certain fluctuation tolerance, if the network connection of the mobile network node (10,11) is interrupted.

14. A system for creating an optimised communication link (SC/DC) and/or an optimised communication network (SC/DC) between at least two network nodes (10,11), a first and a second network node (10,11) comprising a corresponding first and second interface administration module (40,41), the first and the second interface administration module (40,41) comprising means for checking the corresponding network node (10,11) for available network interfaces (30,31), and comprising a corresponding memory module with a first and a second look-up table (401,411) for storing data relating to the available network interfaces (30,31), the first and the second mobile network node (10,11) comprising means for transmitting over a communication channel first and/or second configuration data based on the first and/or second look-up table (401,411), to a central unit (90), the central unit (90) comprising means for storing first and/or second configuration data, the mobile network nodes (10,11) and the central unit (90) comprising means for transmitting over a communication channel configuration data from the central unit (90) to the first and/or second network node (10,11), **characterised in that**
at least one signalling channel (SC), between the mobile network nodes, for transmission of configuration data via one of the available network interfaces (30,31), being able to be created by means of a first and/or second signalling router module (50,51) of the first and/or second network node (10,11) based on first and/or second configuration data, and
the first and/or the second network node (10,11) comprises a first and/or a second data router module (60,61), at least one data channel (DC), between the network nodes, being able to be created via one of the available network interfaces (30,31) by means of the first and/or second data router module (60,61), based on first and/or second configuration data.

15. System according to claim 14, **characterised in that** different network interfaces (30, 31) may be used for creating the at least one signalling channel (SC) and/or for creating the at least one data channel (DC).

16. System according to one of the claims 14 to 15, **characterised in that** first and/or second configuration data are transmittable between the first and/or second network node (10,11) and the central unit (90) via one of the network interfaces (30,31).

17. System according to claim 16, **characterised in that** the first and/or the second network node (10,11) and the central unit (90) comprise authentication modules and/or encryption modules.

18. System according to one of the claims 14 to 17, **characterised in that** a multiplicity of signalling channels (SC) and/or a multiplicity of data channels (DC) are able to be established, different network interfaces (30) and/or communication parameters and/or security parameters being assignable to the individual signalling channels (SC) and/or the individual data channels (DC).

19. System according to one of the claims 14 to 18, **characterised in that** by means of the corresponding interface administration module (40,41), the first and/or the second mobile network node (10,11) is able to be checked for available network interfaces (30,31) at definable points in time, the corresponding look-up table (401,411) being updatable.

20. System according to one of the claims 14 to 19, **characterised in that** the at least one signalling channel (SC) and/or the at least one data channel (DC) is dynamically adaptable and/or changeable based on first and/or second configuration data by means of a signalling router module (50,51) and/or data router module (60,61).

## Revendications

1. Procédé pour établir un lien de communication (SC/DC) optimisé et/ou un réseau de communication (SC/DC) optimisé entre au moins deux noeuds mobiles de réseau (10,11), procédé dans lequel un premier et un second module d'administration d'interface (40,41) d'un premier et second noeud mobile de réseau (10,11) vérifient le noeud mobile correspondant de réseau afin de rechercher des interfaces de réseau disponibles (30,31) et génèrent une première et seconde table de consultation (401,411) avec des interfaces de réseau disponibles (30,31) dudit noeud mobile correspondant de réseau, dans lequel, en se basant sur ladite première et/ou seconde table de consultation (401,411), des premières et/ou secondes données de configuration dudit noeud mobile correspondant de réseau (10,11) sont transmises via un canal de communication à une unité centrale (90) et stockées d'une manière accessible dans ladite unité centrale (90), lesdites premières et/ou secondes données de configuration comprenant au moins des paramètres de communication et/ou des paramètres de sécurité, et dans lequel des premières et/ou secondes données de configuration sont transmises depuis ladite unité centrale (90) via un canal de communication vers ledit premier et/ou second noeud mobile de réseau (10,11), **caractérisé en ce que**,
sur la base de premières et/ou secondes données de configuration, au moyen d'un premier et/ou second module de routeur de signalisation (50,51) dudit noeud mobile correspondant de réseau, au moins un canal de signalisation (SC) est établi entre lesdits noeuds mobiles de réseau pour la transmission de données de configuration via l'une desdites interfaces de réseau disponibles (30,31), et
sur la base desdites premières et/ou secondes données de configuration, au moyen d'un premier et/ou second module de routeur de données (60,61) dudit noeud mobile correspondant de réseau, au moins un canal de données (DC) est établi entre lesdits noeuds mobiles de réseau via l'une desdites interfaces de réseau disponibles (30,31).

2. Procédé selon la revendication 1, **caractérisé en ce que** des interfaces de réseau différentes (30,31) sont utilisées pour établir ledit au moins un canal de signalisation (SC) et/ou pour établir ledit au moins un canal de données (DC).

3. Procédé selon l'une des revendications 1 à 2, **caractérisé en ce que** des premières et secondes données de configuration sont transmises entre ledit noeud mobile correspondant de réseau et ladite unité centrale (90) via l'une desdites interfaces de réseau disponibles (30,31).

4. Procédé selon l'une des revendications 1 à 3, **caractérisé en ce que** lesdites données de configuration sont stockées dans ladite unité centrale (90) d'une manière d'accès contrôlé, des données de requête d'accès depuis des noeuds mobiles de réseau pour l'accès à des données de configuration étant vérifiées au moyen d'un module d'accès conditionnel de ladite unité centrale (90).

5. Procédé selon la revendication 4, **caractérisé en ce que** des données de facturation pour la facturation de services utilisés avec la réception de données de configuration sont transmises via le réseau vers un serveur de transaction.

6. Procédé selon l'une des revendications 1 à 5, **caractérisé en ce que** la transmission de données de configuration entre un noeud de réseau mobile (10,11) et ladite unité centrale (90) est authentifiée et/ou cryptée au moyen de méthodes cryptographiques.

7. Procédé selon l'une des revendications 1 à 6, **caractérisé en ce que** ledit premier et/ou second module d'administration d'interface (40,41) vérifie ledit noeud mobile correspondant de réseau (10,11) à des moments définissables pour des interfaces de réseau disponibles (30,31) et actualise la table de consultation correspondante (401,411).

8. Procédé selon l'une des revendications 1 à 7, **caractérisé en ce qu'**à des moments définissables et/ou avec un changement dans la table de consultation, des premières et secondes données de configuration sont transmises à ladite unité centrale (90), et/ou rappelées depuis de ladite unité centrale (90), et, sur la base desdites données de configuration transmises, ledit au moins un canal de signalisation (SC) et/ou ledit au moins un canal de données (DC) sont adaptés de manière dynamique et/ou changés de manière dynamique.

9. Procédé selon l'une des revendications 1 à 8, **caractérisé en ce qu'**une pluralité de canaux de signalisation (SC) et/ou une pluralité de canaux de données (DC) sont établis, des interfaces de réseau (30,31) et/ou paramètres de communication et/ou paramètres de sécurité différents pouvant être assignés auxdits canaux de signalisation individuels (SC) et/ou auxdits canaux de données individuels (DC).

10. Procédé selon l'une des revendications 1 à 9, **caractérisé en ce que** lesdites données de configuration comprennent des paramètres pour déterminer la sécurité des données et/ou la fiabilité et/ou le taux de débit minimal et/ou l'identification et/ou la pagination et/ou l'authentification dudit au moins un canal de signalisation (SC) et/ou dudit au moins un canal de données (DC).

11. Procédé selon l'une des revendications 1 à 10, **caractérisé en ce que** des interfaces de réseau (30,31) sont configurées au moins partiellement de manière dynamique.

12. Procédé selon l'une des revendications 1 à 10, **caractérisé en ce que** des interfaces de réseau (30,31) sont configurées au moins partiellement de manière statique.

13. Procédé selon l'une des revendications 1 à 12, **caractérisé en ce que** des paquets de données sortants sont tamponnés dans un tampon de données dudit noeud de réseau mobile (10,11), de manière à ce que le taux de données sortantes d'applications connectées est maintenu au moyen dudit tampon de données, ou maintenu à l'intérieur d'une certaine tolérance de fluctuation, lorsque la connexion de réseau dudit noeud de réseau mobile (10,11) est interrompue.

14. Système pour établir un lien de communication (SC/DC) optimisé et/ou un réseau de communication (SC/DC) optimisé entre au moins deux noeuds de réseau (10,11), un premier et un second noeud de réseau (10,11) comprenant un premier et un second module d'administration d'interface (40,41) correspondant, lesdits premier et second modules d'administration d'interface (40,41) comprenant un moyen pour vérifier le noeud correspondant de réseau (10,11) afin de rechercher des interfaces de réseau disponibles (30,31), et comprenant un module correspondant de mémoire avec une première et une seconde table de consultation (401,411) pour stocker des données en relation avec les interfaces de réseau disponibles (30,31), lesdits premier et second noeuds mobiles de réseau (10,11) comprenant un moyen pour transmettre, via un canal de communication, des premières et/ou secondes données de configuration, basées sur ladite première et/ou seconde table de consultation (401,411), vers une unité centrale (90), ladite unité centrale (90) comprenant un moyen pour stocker des premières et/ou secondes données de configuration, lesdits noeuds mobiles de réseau (10,11) et ladite unité centrale (90) comprenant un moyen pour transmettre, via un canal de communication, des données de configuration depuis ladite unité centrale (90) vers ledit premier et/ou second noeud mobile de réseau (10,11), **caractérisé en ce que**,
sur la base de premières et/ou secondes données de configuration, au moyen d'un premier et/ou second module de routeur de signalisation (50,51) desdits premier et/ou second noeuds de réseau, au moins un canal de signalisation (SC) entre lesdits noeuds mobiles de réseau pour la transmission de données de configuration est susceptible d'être établi via l'une desdites interfaces de réseau disponibles (30,31), et
ledit premier et/ou second noeud de réseau (10,11) comprend un premier et/ou second module de routeur de données (60,61), ce par quoi, sur la base de premières et/ou secondes données de configuration, au moyen desdits premier et/ou second modules de routeur de données (60,61), au moins un canal de données (DC) entre lesdits noeuds mobiles de réseau est susceptible d'être établi via l'une desdites interfaces de réseau disponibles (30,31).

15. Système selon la revendication 14, **caractérisé en ce que** des interfaces de réseau différentes (30,31) peuvent être utilisées pour établir ledit au moins un canal de signalisation (SC) et/ou pour établir ledit au moins un canal de données (DC).

16. Système selon l'une des revendications 14 à 15, **caractérisé en ce que** des premières et secondes données de configuration sont susceptibles d'être transmises entre ledit premier et/ou second noeud de réseau (10,11) et ladite unité centrale (90) via l'une desdites interfaces de réseau (30,31).

17. Système selon la revendication 16, **caractérisé en ce que** ledit premier et/ou second noeud de réseau (10,11) et ladite unité centrale (90) comprennent des modules d'authentification et/ou des modules de cryptage.

18. Système selon l'une des revendications 14 à 17, **caractérisé en ce qu'**une pluralité de canaux de signalisation (SC) et/ou une pluralité de canaux de données (DC) sont susceptibles d'être établis, des interfaces de réseau (30) et/ou paramètres de communication et/ou paramètres de sécurité différents pouvant être assignés auxdits canaux de signalisation individuels (SC) et/ou auxdits canaux de données individuels (DC).

19. Système selon l'une des revendications 14 à 18, **caractérisé en ce que**, par ledit module d'administration d'interface correspondant (40,41), ledit premier et/ou second noeud mobile de réseau (10,11) est susceptible d'être vérifié à des moments définissables pour des interfaces de réseau disponibles (30,31), et ladite table de consultation correspondante (401,411) est susceptible d'être actualisée.

20. Système selon l'une des revendications 14 à 19, **caractérisé en ce que**, par un module de routeur de signalisation (50,51) et/ou un module de routeur de données (60,61) et sur la base desdites données de configuration transmises, ledit au moins un canal de signalisation (SC) et/ou ledit au moins un canal de données (DC) sont susceptibles d'être adaptés et/ou changés de manière dynamique.
